# EUROPEAN PATENT APPLICATION

(11) **EP 4 745 395 A1**
(43) Date of publication of application: **20.05.2026**
(21) Application number: 25180974.5
(22) Date of filing: 05.06.2025
(51) Int. Cl.: F03B 17/04

(54) **A BUOYANCY-DRIVEN POWER GENERATION DEVICE AND POWER GENERATION METHOD THEREFOR**

(30) Priority: 18.11.2024 HK 32024099696
(71) Applicant: Yip, Cheung, Kowloon (HK)
(72) Inventor: Yip, Cheung, Kowloon (HK)
(74) Representative: Cabinet Chaillot

(57) **Abstract**

The present invention relates to a buoyancy-driven power generation device and a power generation method therefor, wherein the buoyancy-driven power generation device includes an air pump, a water tank, a transmission gear set and a generator set, a hollow rotating shaft is horizontally mounted in the water tank, one end of the hollow rotating shaft is open, and is connected to an air output end of the air pump; the other end of the hollow rotating shaft is connected to the transmission gear set; the transmission gear set is connected to the rotating shaft of the generator set; a hollow rod is mounted in a direction perpendicular to the hollow rotating shaft, and an air storage chamber is mounted at the end of the hollow rod; the air output from the air pump enters the air storage chamber along the hollow rotating shaft and the hollow rod; the air storage chamber has an intake port, a vent port and a vent control valve for opening and closing the vent port, and the hollow rods are in communication with the intake port; the air output by the air pump enters the air storage chamber from the intake port. With the present invention, it is possible to generate electricity in an environmentally friendly, stable, and reliable manner.

## Description

### Technical Field

The present invention relates to the technical field of mechanical driving, and more particularly to a buoyancy-driven power generation device and a power generation method therefor.

### Background Art

At present, the common power generation includes thermal power generation, hydraulic power generation, wind power generation, solar energy, geothermal energy, nuclear power generation, etc. But the thermal power generation needs to exploit oil, natural gas, biogas, coal, combustible ice, etc., which is difficult to exploit, high cost, high carbon emission caused by combustion, high pollution of the atmosphere, and it is necessary to build long-distance transmission network; for hydropower generation, it needs to be close to a large river, dam construction, high cost, limited by geography, and needs to build long-distance transmission network; for wind power generation, it needs to be close to a large wind field, build a large number of windmills, destroy grassland, mountains, sea landscape, need to build long-distance transmission network, too strong, too weak, and no wind will affect wind power generation, so wind power generation is unstable; for solar power generation, it needs sufficient sunlight, installs a large number of solar panels, which destroys grassland, mountains, sea landscape, it also needs to build long-distance transmission network, which is affected by night, rain, and is unstable; for nuclear power generation, it needs high technology and is restricted by nuclear fuel/material supply conditions.

Therefore, there is a need for a technical solution that can solve the above-mentioned problem of power generation.

### Summary of the Invention

It is an object of the present invention to provide a buoyancy-driven power generation device and a power generation method therefor, which are environmentally friendly, stable, and reliable in power generation.

A first aspect of the present invention provides a buoyancy-driven power generation device, including an air pump, a water tank, a transmission gear set, and a generator set, wherein a hollow rotating shaft is horizontally mounted in the water tank, one end of the hollow rotating shaft is open, and the open end is connected to an air output end of the air pump; the other end of the hollow rotating shaft is connected to a gear shaft of a first end gear in the transmission gear set; a gear shaft of a second end gear in the transmission gear set is connected to a rotating shaft of the generator set;
a plurality of symmetrical pairs of hollow rods are mounted in a direction perpendicular to the hollow rotating shaft, and at least one air storage chamber is mounted at an end of the hollow rods; the connection between the hollow rods and the air storage chamber is an intake port of the air storage chamber, and the air output from the air pump enters the air storage chamber along the hollow rotating shaft and the hollow rods via the intake port; the air storage chamber is further provided with a vent port and a vent control valve that controls the opening and closing of the vent port.

Further, an intake control valve for controlling the opening and closing of the intake port is further provided at the intake port.

Further, at least one of the vent ports is provided at the end of the air storage chamber remote from the intake port.

Further, the vent ports are two or four, and the two or four vent ports are provided on both sides of the air storage chamber, respectively.

Further, the ends of the hollow rods are in communication with a plurality of air storage chambers.

Further, a bracket set for supporting the hollow rotating shaft is further included, the bracket set is rotatably connected to the hollow rotating shaft.

Further, a bearing is provided at the rotational connection of the bracket set to the hollow rotating shaft.

A second aspect of the present invention is a power generation method for the buoyancy-driven power generation device according to the above-described first aspect, including the following steps:
connecting hollow rods and communicating with a hollow rotating shaft, providing an air storage chamber at the end of the hollow rod, and providing an intake port and a vent port in the air storage chamber to form a drive body;
controlling a vent control valve to close the vent port of the air storage chamber on the hollow rod;
immersing the drive body in water;
inflating the air storage chamber via the hollow rotating shaft and the hollow rod, and the air storage chamber gradually floating up after being filled with air;
when the air storage chamber rotates up to near the highest point, controlling the vent control valve to open the vent port of the air storage chamber, the air in the air storage chamber discharges via the vent port, and at the same time, the water outside the air storage chamber enters the air storage chamber via the vent port, and the air storage chamber continues to rotate up to cross the highest point and gradually starts to sink;
when the air storage chamber sinks, the air gradually exhausting and the water gradually filling, controlling the vent control valve to close the vent port;
when the air storage chamber sinks close to the lowest point, while controlling the vent control valve to open the vent port, controlling the intake control valve to open the intake port, discharging the water in the air storage chamber via the vent port, and at the same time, the air filling via the hollow rods and the intake port enters the air storage chamber and the air storage chamber continues to sink to cross the lowest point and gradually starts to float up;
when the air storage chamber floats up, the water gradually exhausting, and after the air gradually fills, controlling the vent control valve and the intake control valve to respectively close the vent port and the intake port;
the air storage chamber performing cyclic floating up and sinking circular rotational motion, so as to drive the hollow rotating shaft to rotate, drive the rotation of the transmission gear set, and then drive the rotation of the rotating shaft of the generator set to generate power.

Further, the step of controlling the intake control valve to close the intake port after the air storage chamber inflating via the hollow rotating shaft and the hollow rods is further included. Further, when the vent control valve is controlled to open the vent port, the intake control valve is simultaneously controlled to close the intake port; when the vent control valve is controlled to close the vent port, the intake control valve is simultaneously controlled to open the intake port.

The buoyancy-driven power generation device of the present invention floats up through the intake air of the air storage chamber immersed in the water, exhausts the air, and sucks the water to sink; a driving force to rotate the hollow rotating shaft is then generated during the cycle of evacuating the water, thereby driving the generator set to generate electricity. The power generation using the buoyancy-driven power generation device of the present invention, i.e. environmentally friendly, also has a continuous driving capability to stably and reliably generate power.

### Brief Description of the Drawings

FIG. 1 is a schematic view of the structure of a buoyancy-driven power generation device according to the present invention.
FIG. 2 is a schematic view showing the relationship between the position of the rotation of the air storage chamber and the intake/vent of the buoyancy-driven power generation device according to the present invention.
FIG. 3 is a flow chart of a power generation method for the buoyancy-driven power generation device according to the present invention.

### Detailed Description of the Invention

The present invention will now be further described with reference to the accompanying drawings and examples.

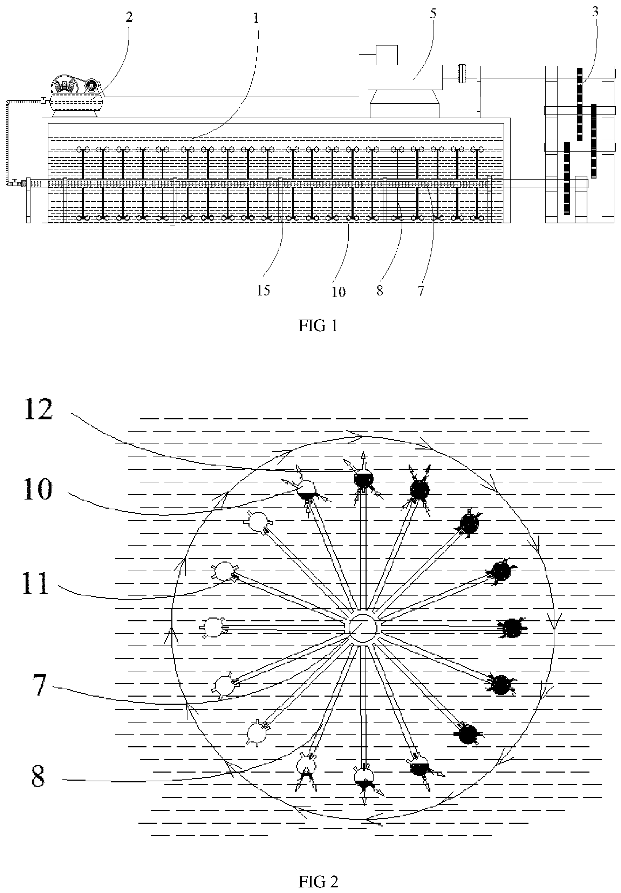

Referring to FIG. 1, the present invention provides a buoyancy-driven power generation device including a water tank 1, an air pump 2, an interconnected transmission gear set 3, and a generator set 5.

Further, a hollow rotating shaft 7 is horizontally mounted in the water tank 1. One end of the hollow rotating shaft 7 is open, and the open end of the hollow rotating shaft 7 is connected to the air output end of the air pump 2; the air of the air pump 2 is caused to enter the hollow rotating shaft 7 through the open end of the hollow rotating shaft 7. The other end of the hollow rotating shaft 7 is connected to a gear shaft of a first end gear in the transmission gear set 3; the gear shaft of the second end gear in the transmission gear set 3 is connected to the rotating shaft of the generator set 5; in this way, the hollow rotating shaft 7 is rotated, and the motor shaft of the generator set 5 is driven to rotate by the transmission gear set 3 so that power generation is achieved.

In the present embodiment, a plurality of pairs of symmetrically provided hollow rods 8 are mounted in a direction perpendicular to the hollow rotating shaft 7; and the hollow rods 8 are in communication with the hollow rotating shaft 7. At least one air storage chamber 10 is mounted at the ends of the hollow rods 8. The connection between the hollow rods 8 and the air storage chamber 10 is an intake port 11 of the air storage chamber so that the air output from the air pump 2 enters the air storage chamber 10 along the hollow rotating shaft 7, the hollow rods 8, and via the intake port 11.

Specifically, referring to FIG. 2, the air storage chamber 10 has a vent port 12 and a vent control valve for controlling the opening and closing of the vent port 12. Accordingly, an intake control valve for controlling the opening and closing of the intake port 11 may also be provided at the intake port 11.

In the present embodiment, an intake port 11 is provided at the connection of the air storage chamber 10 and the hollow rods 8. A vent port 12 is provided at the end of the air storage chamber 10 remote from the connection of the air storage chamber 10 to the hollow rods 8. That is, the intake port 11 and the vent port 12 are provided on the chamber walls on the opposite sides of the air storage chamber 10. In this way, the air storage chamber 10 floats up after intaking air, and sinks after venting and intaking water, which facilitates rapid evacuation of water from the air storage chamber 10 when the water level descends near the (lowest) vertical point of the hollow rotating shaft 7; improves the efficiency with which the air storage chamber 10 floats up and sinks for a circular rotational motion. It will be appreciated that the intake port 11 is one and the vent ports 12 may be provided in one or more.

In other preferred embodiments, the vent ports 12 are two or four, and the two or four vent ports 12 are symmetrically provided on both sides of the intake port 11, respectively. In this way, the speed of venting, water intaking, and water draining of the air storage chamber 10 is increased; and the water can be drained in the process of sinking the air storage chamber 10; the speed at which the air storage chamber 10 sinks is increased. Preferably, the vent control valves for opening and closing vent ports 12 are respectively provided with a first on-off valve and a second on-off valve, the first on-off valve is used for controlling two vent ports provided at both sides of the intake port; the second on-off valve is used to control two vent ports provided symmetrically to both sides of the intake port. When the air storage chamber 10 sinks to a point close to being perpendicular to the hollow rotating shaft 7; by closing the first on-off valve in advance so as to close the two vent ports on both sides of the intake port, the air output from the air pump 2 enters the air storage chamber 10 while the water is discharged from the other two vent ports, the water in the air storage chamber 10 can be quickly evacuated.

Further, the ends of the hollow rods 8 are in communication with a plurality of air storage chambers 10, so that the driving force of the air storage chambers 10 on the hollow rods 8 and the hollow rotating shaft 7 can be increased; at the same time, it is possible to increase the speed at which the air storage chamber 10 performs a circular rotational motion.

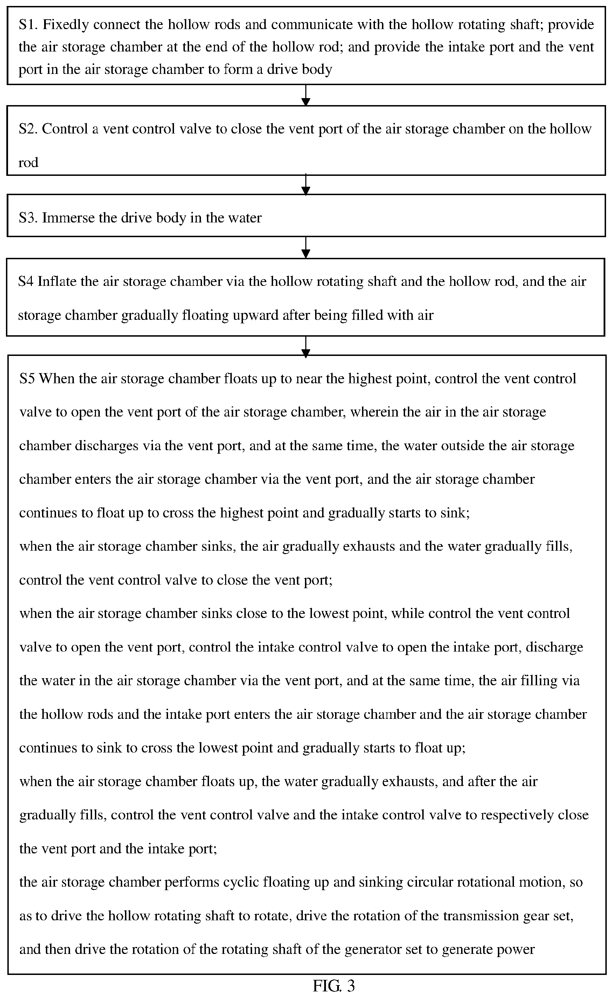

Further, the present invention further includes a bracket set 15 for supporting the hollow rotating shaft 7 such that the hollow rotating shaft 7 is stably supported to the water tank 1 to increase the stability of the rotation of the hollow rotating shaft 7. At the same time, the bracket set 15 is rotatably connected to the hollow rotating shaft 7. Preferably, a bearing is provided at the rotational connection of the bracket set 15 to the hollow rotating shaft 7. Referring to FIG. 1, FIG. 2, and FIG. 3, the power generation method for the buoyancy-driven power generation device of the present invention is described in detail as follows, including the following steps:
S1, fixedly connecting the hollow rods 8 and communicating with the hollow rotating shaft 7; providing an air storage chamber 10 at the ends of the hollow rods 8; and providing an intake port 11 and a vent port 12 in the air storage chamber 10; forming a drive body;
S2, controlling the vent control valve to close the vent port 12 of the air storage chamber 10 on the hollow rods 8;
S3, immersing the drive body in water;
S4, inflating the air storage chamber 10 via the hollow rotating shaft 7 and the hollow rods 8, the air storage chamber 10 gradually floating up after being filled with air;
S5, when the air storage chamber 10 floats up to near the highest point, controlling the vent control valve to open the vent port 12 of the air storage chamber 10, the air in the air storage chamber 10 is discharged via the vent port 12, at the same time, the water outside enters the air storage chamber 10 via the vent port 12, and the air storage chamber 10 continues to float up to cross the highest point and then gradually starts to sink;
the air storage chamber 10 gradually exhausts the air while sinking, and after the water gradually fills, the vent control valve is controlled to close the vent port 12;
when the air storage chamber 10 sinks close to the lowest point, controlling the vent control valve to open the vent port 12 while controlling the air intake control valve to open the air intake port 11, discharging the water in the air storage chamber 10 via the vent port 12, and at the same time, entering the air storage chamber 10 via the hollow rods 8 and the air charged in the air intake port 11, and the air storage chamber 10 continuing to sink to cross the lowest point and gradually starting to float up;
while the air storage chamber 10 floats up, the water gradually exhausts, and after the air gradually fills, the vent control valve and the intake control valve are controlled to respectively close the vent port 12 and the intake port 11;
the air storage chamber 10 performs cyclic floating up and sinking circular rotational motion, so as to drive the hollow rotating shaft 7 to rotate, drive the rotation of the transmission gear set 3, and then drive the rotation of the rotating shaft of the generator set 5 to generate power. It will be appreciated that the above steps may be ordered in many different ways; for example, firstly, step S2 is operated to close the vent port 12 of the air storage chamber 10; the operations of steps S3 and S1 may then be performed in no sequential order.

Further, the present invention does not limit the open/close state of the intake port 11, and the intake port 11 may be in a normally open state, and the air storage chamber 10 can be inflated both during the floating up and sinking process of the air storage chamber 10. Alternatively, in step S4, after the air storage chamber inflating via the hollow rotating shaft and the hollow rod, the intake control valve is controlled to close the intake port, and the air storage chamber 10 gradually floats up after being filled with the air. Alternatively, when the vent control valve is controlled to open the vent port 12, the intake control valve is controlled to close the intake port 11 at the same time, and the inflating of the air storage chamber 10 is stopped, and the air storage chamber 10 performs vent and water intake at this moment, and performs a sinking motion; when the vent control valve is controlled to close the vent port 12, the intake control valve is simultaneously controlled to open the intake port 11. When the vent port 12 is closed, it indicates that the water in the air storage chamber 10 has been evacuated, and the intake port 11 is opened so that the air fills the air storage chamber 10, and the air storage chamber 10 performs a floating up motion. It should be noted that the intake port 11 is preferably provided in a normally open state when the number of vent ports is plural. When there is one vent port, it is more suitable that the vent port 12 is opened while the intake port 11 is closed, so that the vent port 12 and the intake port 11 are in an opposite on-off state.

The foregoing examples merely present preferred embodiments of the present invention, which are described in more details and are not to be construed as limiting the scope of the present invention. It will be appreciated by persons skilled in the art that numerous variations and modifications may be made to the present invention without departing from the inventive concepts, such as combinations of different features in the various embodiments, and the like, which fall within the scope of the present invention.

## Claims

1. A buoyancy-driven power generation device, comprising an air pump, a water tank, a transmission gear set, and a generator set, **characterized in that**:
a hollow rotating shaft is horizontally mounted in the water tank, one end of the hollow rotating shaft is open, and the open end is connected to an air output end of the air pump; the other end of the hollow rotating shaft is connected to a gear shaft of a first end gear in the transmission gear set; a gear shaft of a second end gear in the transmission gear set is connected to a rotating shaft of the generator set;
a plurality of symmetrical pairs of hollow rods are mounted in a direction perpendicular to the hollow rotating shaft, and at least one air storage chamber is mounted at an end of the hollow rods; the connection between the hollow rods and the air storage chamber is an intake port of the air storage chamber, and the air output from the air pump enters the air storage chamber along the hollow rotating shaft and the hollow rods via the intake port; the air storage chamber is further provided with a vent port and a vent control valve that controls the opening and closing of the vent port.

2. The buoyancy-driven power generation device according to claim 1, **characterized in that** an intake control valve for controlling opening and closing of the intake port is further provided at the intake port.

3. The buoyancy-driven power generation device according to claim 1, **characterized in that** at least one of the vent ports is provided at an end of the air storage chamber remote from the intake port.

4. The buoyancy-driven power generation device according to claim 3, **characterized in that** the vent ports are two or four, and the two or four vent ports are provided on both sides of the air storage chamber, respectively.

5. The buoyancy-driven power generation device according to claim 1, **characterized in that** the ends of the hollow rods are in communication with a plurality of air storage chambers.

6. The buoyancy-driven power generation device according to claim 1, **characterized by** further comprising a bracket set for supporting the hollow rotating shaft, the bracket set being rotatably connected to the hollow rotating shaft.

7. The buoyancy-driven power generation device according to claim 6, **characterized in that** a bearing is provided at the rotational connection of the bracket set to the hollow rotating shaft.

8. A power generation method for the buoyancy-driven power generation device according to any one of claims 1 to 7, **characterized by** comprising the following steps:
connecting the hollow rods and communicating with the hollow rotating shaft, providing the air storage chamber at the end of the hollow rod, and providing the intake port and the vent port in the air storage chamber to form a drive body;
controlling the vent control valve to close the vent port of the air storage chamber on the hollow rod;
immersing the drive body in water;
inflating the air storage chamber via the hollow rotating shaft and the hollow rod, and the air storage chamber gradually floating up after being filled with air;
when the air storage chamber floats up to near the highest point, controlling the vent control valve to open the vent port of the air storage chamber, the air in the air storage chamber discharging via the vent port, and at the same time, the water outside the air storage chamber entering the air storage chamber via the vent port, and the air storage chamber continuing to float up to cross the highest point and gradually starting to sink;
when the air storage chamber sinks, the air gradually exhausting and the water gradually filling, controlling the vent control valve to close the vent port;
when the air storage chamber sinks close to the lowest point, while controlling the vent control valve to open the vent port, controlling the intake control valve to open the intake port,
discharging the water in the air storage chamber via the vent port, and at the same time, the air filling via the hollow rods and the intake port entering the air storage chamber, the air storage chamber continuing to sink to cross the lowest point and gradually starting to float up;
when the air storage chamber floats up, the water gradually exhausting, and after the air gradually fills, controlling the vent control valve and the intake control valve to respectively close the vent port and the intake port;
the air storage chamber performing cyclic floating up and sinking circular rotational motion, so as to drive the hollow rotating shaft to rotate, drive the rotation of the transmission gear set, and then drive the rotation of the rotating shaft of the generator set to generate power.

9. The power generation method according to claim 8, **characterized by** further comprising the step of controlling the intake control valve to close the intake port after the air storage chamber inflating via the hollow rotating shaft and the hollow rod.

10. The power generation method according to claim 8, **characterized in that** when the vent control valve is controlled to open the vent port, the intake control valve is simultaneously controlled to close the intake port; when the vent control valve is controlled to close the vent port, the intake control valve is simultaneously controlled to open the intake port.
